# EUROPÄISCHE PATENTSCHRIFT

(11) **EP 3 470 129 B1**
(45) Veröffentlichungstag und Bekanntmachung des Hinweises auf die Patenterteilung: **05.10.2022**
(21) Anmeldenummer: 18205867.7
(22) Anmeldetag: 27.08.2014
(51) Int. Cl.: B01D 46/00, B01D 46/24, B01D 46/52, B01D 50/00

(54) **LUFTFILTERSYSTEM UND LUFTFILTERELEMENT FÜR EIN LUFTFILTERSYSTEM**
AIR FILTER SYSTEM AND AIR FILTER ELEMENT FOR AN AIR FILTER SYSTEM
SYSTÈME DE FILTRE À AIR ET ÉLÉMENT DE FILTRE À AIR POUR UN SYSTÈME DE FILTRE À AIR

(30) Priorität: 02.09.2013 DE 102013014488
(43) Veröffentlichungstag der Anmeldung: 17.04.2019
(62) Teilanmeldung aus: 14182365.8
(73) Patentinhaber: MANN+HUMMEL GmbH, 71636 Ludwigsburg (DE)
(72) Erfinder: RUHLAND, Klaus-Dieter, 67149 Meckenheim (DE); KAUFMANN, Michael, 67149 Meckenheim (DE)
(74) Vertreter: Mann + Hummel Intellectual Property

(56) Entgegenhaltungen:
- DE-A1- 19 712 679
- DE-C1- 4 241 586
- US-A1- 2010 146 917
- US-A1- 2012 067 017

## Beschreibung

### Technisches Gebiet

Die Erfindung betrifft ein Luftfiltersystem, insbesondere zur Verwendung als Luftfilter einer Brennkraftmaschine, sowie ein Filterelement zum Einbau in ein solches Filtersystem.

### Stand der Technik

Die Dokumente US 2010/146917 A1 und US 2012/067017 A1 zeigen Rundluftfilterelemente mit in den Innenraum des Filterelements hineinragenden Endscheiben. Die Dokumente DE 42 41 586 C1 und DE 197 12 679 A1 zeigen Rundluftfilter mit gehäusefestem Stützrohr und Sekundärfilterelement. Aus der WO 2009/047196 A1 ist ein Filtersystem für Brennkraftmaschinen mit einem Filterelement bekannt. Dieses Filtersystem dient insbesondere der Filtrierung der Ansaugluft einer Brennkraftmaschine und besteht aus einem Gehäuse und einem Deckel zur Aufnahme des Filterelements, bei dem durch die Ausgestaltung der Dichtungen des Filterelements mit zwei ringwulstförmigen Anordnungen und einer dazwischen liegenden Dichtungsnut gewährleistet ist, dass einerseits eine Abdichtwirkung und andererseits eine axiale Abstützung des Filterelements in einem Gehäuse erzielt wird. Gerade bei der Verwendung von Kunststoff für die Abdichtung an schwingungsbelasteten Elementen ist eine Gestaltung erforderlich, die auch bei extremen Temperaturschwankungen zuverlässig arbeitet.

Weiter beschreibt die WO 2009/047196 A1, dass ein Sekundärelement vorgesehen ist, welches im Inneren eines Filterelements des Filtersystems positioniert ist. Das Sekundärelement hat die Aufgabe, bei einem Austausch des Filterelements den Auslass des Filtersystems weiterhin verschlossen zu halten, so dass kein Schmutz in diesen Bereich eindringen kann, während das Filterelement gereinigt oder erneuert wird. Im Betrieb des Filtersystems strömt die gereinigte Luft durch das Sekundärelement hindurch, welches eine Vliesauflage auf einer tragenden Struktur aufweist. Das Sekundärelement ist über ein Schraubgewinde an dem Auslassstutzen des Auslasses befestigt und gleichzeitig über einen O-Ring in diesem Bereich abgedichtet.

Grundsätzlich ist vorgesehen, die Filterelemente von Luftfiltern nach einer bestimmten Betriebszeit auszutauschen. Je nach Staubanfall kann die Standzeit eines Luftfilters wenige Tage (Baumaschinen) bis zu mehreren Monaten betragen. Dabei verbleibt üblicherweise das Sekundärelement, das auf der Reinluftseite angeordnet ist, im Filtersystem. Ist jedoch auch das Sekundärelement stark mit Schmutz beladen, so muß es ebenfalls getauscht werden, da sonst der Luftdurchsatz zu sehr verringert wird. Dabei ist die zuverlässige und prozesssichere Abdichtung von Filterelement und Sekundärelement in einem Gehäuse besonders wichtig, um den Ansaugtrakt einer darauf folgenden Brennkraftmaschine vor eindringendem Schmutz zu schützen.

### Offenbarung der Erfindung

Eine Aufgabe der Erfindung ist es deshalb, ein Filtersystem zu schaffen, bei dem eine zuverlässige Abdichtung zwischen dem Bereich des ungefilterten und dem Bereich des gefilterten Mediums möglich ist, die sowohl während des Betriebs aufrechterhalten als auch insbesondere nach einem montagefreundlichen Austausch von Filterelement und/oder Sekundärelement zuverlässig wiederhergestellt werden kann.

Eine weitere Aufgabe der Erfindung ist es, ein Filterelement zum Einbau in ein solches Filtersystem zu schaffen.

Die vorgenannten Aufgaben werden nach einem Aspekt der Erfindung gelöst bei einem Filtersystem nach Anspruch 1 sowie von einem Filterelement nach Anspruch 10 zum Einbau in ein solches Filtersystem.

Günstige Ausgestaltungen und Vorteile der Erfindung ergeben sich aus den weiteren Ansprüchen, der Beschreibung und der Zeichnung.

Es wird ein Filtersystem vorgeschlagen, das ein Gehäuse mit einer Längsachse, einen Deckel, der das Gehäuse an einer Stirnseite verschließt, einen am Gehäuse angeordneten Einlass zum Zuführen eines zu filternden Mediums und einen am Gehäuse angeordneten Auslass zur Ableitung des gefilterten Mediums, ein auswechselbares Filterelement, welches im Gehäuse angeordnet ist und einen Filterkörper, eine erste an einer Stirnseite angeordnete offene Endscheibe und eine zweite an der gegenüberliegenden Stirnseite angeordnete Endscheibe umfasst, sowie ein gehäusefestes Stützrohr, welches im Inneren des Filterelements um die Längsachse konzentrisch angeordnet ist und insbesondere zur radialen Abstützung des Filterelements dient, umfasst.

Dabei ist das Filterelement erfindungsgemäß mit der zweiten Endscheibe auf dem Stützrohr aufliegend an einer inneren Deckelkontur anliegend verdrehsicher gelagert und so zwischen Stützrohr und Deckel fest verpresst.

Durch die Festlagerung der zweiten Endscheibe des Filterelements wird die Lagerung des Filterelements selbst im Gehäuse unempfindlicher und eindeutiger gegenüber Umwelteinflüssen wie beispielsweise Wassereintrag, hohe Luftfeuchte, und der dadurch eintretenden Erweichung/Verformung des Filterpapieres des Filterkörpers während dem Betrieb. Außerdem ist dadurch eine zuverlässige Abdichtung zwischen dem Bereich des ungefilterten und dem Bereich des gefilterten Mediums gegeben, die sowohl während des Betriebs aufrechterhalten als auch insbesondere nach einem montagefreundlichen Austausch von Filterelement und/oder Sekundärelement zuverlässig wiederhergestellt werden kann.

Der Filterkörper kann beispielsweise aus einem zickzackförmig gefalteten (plissierten) Filterbalg bestehen und ringförmig geschlossen ausgeführt sein. Die Faltung kann beispielsweise durch Messerfaltung, für längere Filterkörper, oder Rotationsfaltung hergestellt werden. Der Filterbalg kann beispielsweise aus Papier oder aus Zellulose oder aus einer Mischfaser aus Kunststoff und Zellulose bestehen. Der Filterbalg kann ferner mit glatter Oberfläche, rolliert und/oder in verschiedenen Prägeformen gestalteter Oberfläche zur Versteifung und/oder Schaffung von Hohlräumen zur Staubablagerung ausgeführt sein. Der Filterbalg kann eine Beschichtung und/oder Imprägnierung aufweisen, um Feuchtigkeit abzuweisen. Er kann alternativ auch mit Nanofasern beschichtet sein. Der Filterkörper kann weiterhin mit einem Fadenwickel, mindestens einer umlaufenden Schmelzklebstoffraupe oder einem Gitter strukturell versteift sein. Unter Fadenwickel wird ein mit Schmelzklebstoff getränkter Faden verstanden, der auf den durch die äußeren Faltkanten gebildeten Umfang des Filterkörpers gewickelt wird, wobei beim Aushärten des Schmelzklebstoffs der Faden versteift und mit den Faltenspitzen verbunden wird. Das Filterelement ist in der Regel als Hauptfilterelement ausgebildet, auf dessen Reinseite und/oder in dessen Innenraum noch ein Sekundärfilterelement angeordnet sein kann.

Vorteilhafterweise kann das Filtersystem ein auswechselbares Sekundärelement mit einem offenen Ende und einem geschlossenen Ende umfassen, welches im Inneren des Stützrohres angeordnet und mit dem offenen Ende in einem Gehäusesitz angebracht ist. Dabei kann das Filterelement mit der zweiten Endscheibe auf dem Stützrohr und/oder auf dem geschlossenen Ende des Sekundärelements aufliegend an einer inneren Deckelkontur anliegend verdrehsicher gelagert sein. Dabei kann das Sekundärelement in den Gehäusesitz gepresst sein oder durch Aufbringen von Kraft über die zweite Endscheibe in den Gehäusesitz gepresst werden. Dadurch, dass auf das Sekundärelement beim Verschließen des Deckels eine starke axiale Kraftkomponente einwirkt, ist sichergestellt, dass dieses sich immer in seiner Endlage befindet, sobald das Gehäuse durch den Deckel verschlossen ist. Damit ist sichergestellt, dass die Dichtung zuverlässig in Eingriff ist. Auch muss bei der Fertigung nicht darauf geachtet werden, ob das Sekundärelement auf Endlage montiert wurde, weil dieses spätestens der Deckel übernimmt, da bei dem Verschließen des Deckels eine Andrückkraft über die zweite Endscheibe des Filterelementes auf das Sekundärelement geleitet wird. Damit ist eine sichere Endlage des Sekundärelementes bei montiertem Deckel sichergestellt. Weiter ist auf diese Weise das Filterelement zusätzlich zum Stützrohr über die zweite Endscheibe axial gegen den Deckel und damit gegen das Gehäuse verspannt und erfährt dadurch eine Festlagerung an der Stirnseite, dem deckelseitigen Ende des Filterelements.

Zweckmäßigerweise kann das Stützrohr an seinem der zweiten Endscheibe zugewandten Ende Aussparungen aufweisen, mit denen die zweite Endscheibe verzahnt oder verzahnbar ist. Zusätzlich macht die Verkrallung des Stützrohres im Werkstoff der Endscheibe das Filterelement unempfindlicher gegen Schwingungseinwirkungen.

Von Vorteil ist auch, wenn der Deckel des Gehäuses rippenförmige Erhebungen aufweist, mit der die zweite Endscheibe des Filterelements verzahnt oder verzahnbar ist. Die zusätzliche Verdrehsicherungswirkung der Verkrallung mit den rippenförmigen Erhebungen im Deckel begünstigt die Vibrationssteifigkeit der Lagerung des Filterelements im Gehäuse noch weiter.

In einer vorteilhaften Ausführungsform weist die zweite Endscheibe eine äußere, mittlere Abstützfläche auf, die bevorzugt senkrecht zur Mittelachse bzw. Längsachse des Filterelements verläuft. Eine parallele, innere Abstützfläche wird weiter bevorzugt durch die Innenseite der zweiten Endscheibe gebildet.

Erfindungsgemäß weist die zweite Endscheibe Abstütznoppen zur axialen Kraftübertragung zwischen Deckel und zweiter Endscheibe auf. Auf diese Weise kann die über das Schließen des Deckels ausgeübte Kraft auf die Endscheibe durch diese durchgeleitet und in das Stützrohr eingeleitet werden, wobei sich eine feste Lagerung des Filterelements ergibt.

Erfindungsgemäß weist die zweite Endscheibe eine Abstütznoppe auch zur axialen Kraftübertragung zwischen Deckel und Sekundärelement auf. Auf diese Weise kann die über das Schließen des Deckels ausgeübte Kraft auf die Endscheibe durch diese durchgeleitet und in das Sekundärelement eingeleitet werden, wodurch dieses wiederum fest in seinen Gehäusesitz gepresst werden kann. Damit ist eine feste Lagerung des Sekundärelements und zugleich auch gute Abdichtung zwischen ungefiltertem und gefiltertem Bereich des Filtersystems möglich.

Vorteilhafterweise kann die zweite Endscheibe, ebenso wie die erste Endscheibe, aus einem Polyurethanschaum oder einem Elastomer bestehen. Selbstverständlich besteht auch die Möglichkeit, die Endscheibe aus mehreren Kunststoffkomponenten herzustellen, um so eine optimale Verformbarkeit über einen großen Temperaturbereich, wie er beim Einsatz in der Praxis auftreten kann, zu gewährleisten. So sind auch thermoplastische Kunststoffe nicht ausgeschlossen. Beide Endscheiben können mit dem Filterkörper verschweißt oder verklebt ausgeführt sein, um eine stabile Verbindung zu bewirken.

Die innere Deckelkontur kann beispielsweise in einem Bereich als ringförmige Nut ausgebildet ist, in welche Abstütznoppen so eingreifen, dass auch eine radiale Abstützung an den radialen Wänden der Nut möglich ist.

Erfindungsgemäß sind an der zweiten Endscheibe eine zentrale Abstütznoppe im Bereich der Längsachse des Filterelements und eine Mehrzahl von kreisförmig um die Längsachse herum angeordneten, regelmäßig oder unregelmäßig beabstandeten, exzentrischen Abstütznoppen vorgesehen. Die Abstütznoppen sind bevorzugt einstückig und/oder materialeinheitlich mit der zweiten Endscheibe ausgeführt. Die zentrale Abstütznoppe kann bevorzugt die äußere, mittlere Abstützfläche bilden. Die radiale Position, d.h. der Abstand vom Mittelpunkt der zweiten Endscheibe der exzentrischen Abstütznoppen ist bevorzugt so gewählt, dass die exzentrischen Abstütznoppen in direkter axialer Fortsetzung eines Stützrohrs eines korrespondierenden Gehäuses angeordnet sind. Bevorzugt stimmt daher der Durchmesser des Kreises, auf dem die exzentrischen Abstütznoppen, bevorzugt mit ihren Mittelpunkten, angeordnet sind, mit dem Durchmesser des Stützrohrs, bevorzugt mit dem Mittelwert zwischen Innen- und Außendurchmesser des Stützrohrs überein. Anders ausgedrückt sind die exzentrischen Abstütznoppen beispielsweise auf einem Kreis mit dem Durchmesser des Stützrohrs angeordnet. Der Kraftfluss erfolgt dabei bevorzugt rein axial vom Stützrohr über die zweite Endscheibe und deren exzentrische Abstütznoppen auf die innere Deckelkontur des Deckels.

Die innere Deckelkontur weist in der Mitte des Deckels bevorzugt eine ebene Fläche auf, an welcher die zentrale Abstütznoppe abstützbar ist. Die zweite Endscheibe ist bevorzugt zumindest in dem vom Filterkörper ringförmig umschlossenen Bereich derart elastisch ausgebildet, dass der mittlere Bereich mit der zentralen Abstütznoppe vom Sekundärelement elastisch nach außen gedrückt werden kann, bis sie am Deckel anliegt. Während der Montage des Deckels werden dann die exzentrischen Abstütznoppen gegenüber der zentralen Abstütznoppe leicht in Richtung offene Endscheibe verschoben. Wenn dann der Gehäusedeckel zum Wechsel des Filterelements abgenommen wird, ist die zweite Endscheibe leicht vorgespannt und erleichtert das Entfernen des Filterelements von seinem reibungsbehafteten Dichtsitz an der offenen Endscheibe, da bei entferntem Deckel Zug auf die äußeren Bereiche der zweiten Endscheibe und damit den Filterkörper ausgeübt wird.

In einer weiteren bevorzugten Ausführungsform sind in der inneren Deckelkontur, bevorzugt in der ringförmigen Nut, rippenförmige, bevorzugt radial verlaufende, sich weiter bevorzugt leicht in den Innenraum des Filtergehäuses erstreckende, Erhebungen angebracht, mit denen sich der elastische Werkstoff der zweiten Endscheibe verzahnen oder verkrallen kann, so dass das Filterelement dadurch gegen mögliche Verdrehungen bei Vibrationen im Betrieb gesichert ist. Die Erhebungen drücken sich dabei bevorzugt in die exzentrischen Abstütznoppen der zweiten Endscheibe, so dass ein Formschluss in Drehrichtung um die Längsachse erzielt wird.

Gemäß einer vorteilhaften Weiterbildung sind auch zusätzlich oder alternativ an dem der zweiten Endscheibe zugewandten Ende des Stützrohrs Aussparungen denkbar, welche ebenfalls eine Verzahnung oder Verkrallung des Stützrohrs mit der zweiten Endscheibe ermöglichen, um so eine Verdrehsicherung des Filterelements bei Vibrationen zu gewährleisten. Die zweite Endscheibe verbindet sich dabei beispielsweise formschlüssig mit dem der zweiten Endscheibe zugewandten Ende des Stützrohrs, beispielsweise kann eine elastische zweite Endscheibe in die Aussparungen durch Verformung und/oder Verpressung bei der Montage eindringen, so dass ein Formschluss in Drehrichtung um die Längsachse erzielt wird.

Hierzu ist eine weitere Ausführungsform vorteilhaft, in welcher die zweite Endscheibe aus einem beispielsweise gegossenen, im Vergleich zum Gehäusematerial und Stützrohrmaterial (beides üblicherweise spritzgegossene Thermoplaste, insbesondere mit Glasfaseranteil, oder Metall) weichen Material verwendet wird, zweckmäßigerweise Polyurethanschaum oder ein ähnlich elastischer Werkstoff, bevorzugt mit einer Härte im Bereich von ca. 10-30 Shore A.

In einer Ausführungsform ist der Abstand zwischen der Innenfläche der zweiten Endscheibe und den axialen Außenflächen der Abstütznoppen bevorzugt gleich oder weiter bevorzugt etwas größer gewählt oder ausgelegt als der Abstand zwischen der Innenfläche des Deckels im Bereich der Längsachse, d.h. in dessen Mitte, und dem axialen Ende des Sekundärelementes bzw. zwischen der Innenfläche des Deckels im Bereich der inneren Deckelkontur und dem Stützrohr.

Besonders bevorzugt ist mindestens einer der genannten Abstände an der zweiten Endscheibe mit einem Übermaß von 1-5 mm ausgelegt, bevorzugt bezogen auf die durch den Deckel einerseits und Stützrohr sowie Sekundärelement andererseits definierten Abstände. Auf diese Weise kann eine zuverlässige Festlagerung des Filterelements gewährleistet werden.

Vorteilhafterweise kann die erste Endscheibe eine Radialdichtung gegenüber dem Gehäuse aufweisen. Dies hat den Vorteil, dass neben einer guten Abdichtung und damit einer sicheren Filterwirkung, durch die Radialdichtung sowie der axialen Verspannung der Abstütznoppen im Deckel eine radiale Führung des Filterelements im Gehäuse bewirkt werden kann und damit eine sehr stabile Halterung des Filterelements im Gehäuse entsteht.

Zweckmäßigerweise kann das Sekundärelement, das mit dem Gehäuse verbunden ist, beim Wechsel des Filterelements im Gehäuse verbleiben. Auf diese Weise ist gewährleistet, dass der sich an den Auslass des Filtergehäuses anschließende weitere Luftführungstrakt vor Verschmutzung beim Austauschprozess geschützt ist.

Vorteilhafterweise kann im Bereich des Einlasses des Filtersystems ein Zyklonabscheider vorgesehen sein und am Gehäuse oder am Deckel ein Schmutzauslass vorgesehen sein. Dieser Zyklonabscheider besteht aus einer Leitgeometrie, die das zu filternde Medium in eine Rotation versetzt. Durch diese Rotation wird der Schmutz im Bereich der Gehäusewand aufkonzentriert und an einer geeigneten Stelle über einen Schmutzauslass ausgetragen. Durch die Vorabscheidung des größten Teils an Schmutz aus der zu filternden Luft kann die Standzeit des eigentlichen Filterelements entscheidend verlängert werden.

Zweckmäßigerweise kann das Filtersystem als Luftfilter, insbesondere als Luftfilter einer Brennkraftmaschine verwendet werden. Der sichere Betrieb von Brennkraftmaschinen beruht auch auf einer sicheren und günstigen Filterung der Ansaugluft für den Verbrennungsbetrieb. Das beschriebene Filterelement stellt dafür eine wirtschaftliche Möglichkeit dar.

Vorteilhaft ist ebenso die Verwendung des Filtersystems als Partikelfilter, insbesondere als Partikelfilter einer Brennkraftmaschine. Auch hier sind die sichere Montage und wirtschaftliche Austauschbarkeit des beschriebenen Filterelements von entscheidender Bedeutung.

Die Erfindung betrifft nach einem weiteren Aspekt ein Filterelement zum Einbau in ein Filtersystem und bevorzugt mit einem oder mehreren Merkmalen wie oben und im Folgenden beschrieben, wobei das Filterelement auswechselbar in dem Gehäuse des Filtersystems anordenbar ist. Durch den Einsatz eines solchen Filterelements in ein beschriebenes Filtersystem ist eine zuverlässige Abdichtung zwischen dem Bereich des ungefilterten und dem Bereich des gefilterten Mediums gegeben, die sowohl während des Betriebs aufrechterhalten als auch insbesondere nach einem montagefreundlichen Austausch des Filterelement zuverlässig wiederhergestellt werden kann.

Weiter betrifft die Erfindung ein Sekundärelement zum Einbau in ein Filtersystem wie oben beschrieben, wobei das Sekundärelement auswechselbar in dem Gehäuse des Filtersystems anordenbar ist. Durch den Einsatz eines solchen Sekundärelements in ein beschriebenes Filtersystem ist eine zuverlässige Abdichtung zwischen dem Bereich des ungefilterten und dem Bereich des gefilterten Mediums gegeben, die sowohl während des Betriebs aufrechterhalten als auch insbesondere nach einem montagefreundlichen Austausch des Sekundärelements zuverlässig wiederhergestellt werden kann.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine perspektivische Ansicht eines Filtersystems nach einem Ausführungsbeispiel der Erfindung mit tangentialem Einlass, zentrischem Auslass und bodenseitigem Schmutzauslass;
- Fig. 2: eine perspektivische Ansicht eines Filtersystems nach einem Ausführungsbeispiel der Erfindung mit abgenommenem Deckel des Gehäuses;
- Fig. 3: eine perspektivische Ansicht eines Filtersystems nach Figur 2, jedoch mit demontiertem Filterelement, sodass ein Stützrohr erkennbar ist;
- Fig. 4: einen Längsschnitt durch ein Filtersystem nach einem Ausführungsbeispiel der Erfindung;
- Fig. 5: eine Innenansicht eines Deckels eines Gehäuses nach einem Ausführungsbeispiel der Erfindung;
- Fig. 6: eine perspektivische Ansicht eines Sekundärelements nach einem Ausführungsbeispiel der Erfindung;
- Fig. 7: einen Schnitt durch den deckelseitigen Teil eines Filtersystems nach einem Ausführungsbeispiel der Erfindung;
- Fig. 8: einen Schnitt durch den auslassseitigen Teil eines Filtersystems nach einem Ausführungsbeispiel der Erfindung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

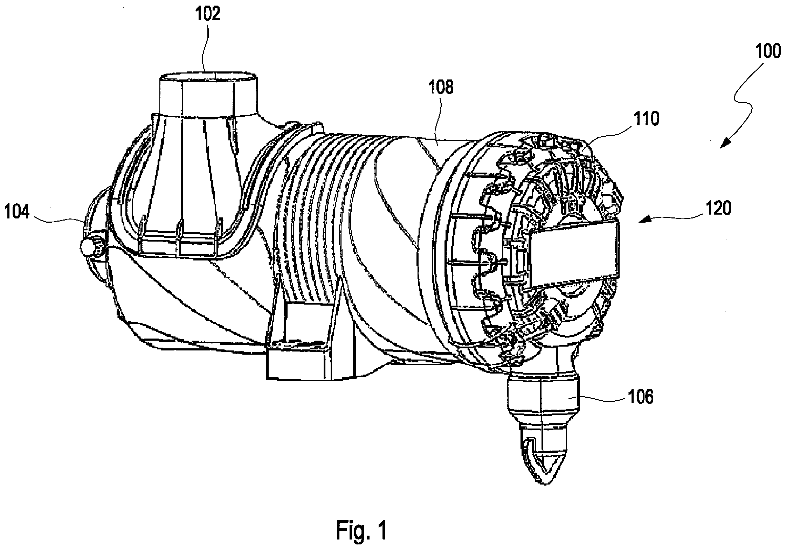

Figur 1 zeigt eine perspektivische Ansicht eines Filtersystems 100 nach einem Ausführungsbeispiel der Erfindung mit tangentialem Einlass 102, zentrischem Auslass 104 und bodenseitigem Schmutzauslass 106. Dargestellt ist eine Rundfilterbauform, die ein Gehäuse 108 umfasst, das an einer Stirnseite 120 mit einem Deckel 110 verschlossen ist. In dem Luftfiltersystem strömt staubbeladene Luft durch den Einlass 102, der tangential zur Gehäusewand und zum innen eingebauten Luftfilterelement angeordnet ist, ebenfalls tangential in den das Luftfilterelement ringförmig umgebenden, rohseitigen Anströmraum, sodass die Luft im Innern des Gehäuses 108 in eine Rotationsbewegung versetzt wird. Ein direktes Eindringen der durch den Einlass 102 eintretenden Luft in die im Einlassbereich vorhandenen Falten des Luftfilterelements wird durch einen Anströmschutz am Filterelement verhindert, der beispielsweise durch eine das Filterelement im Anströmbereich ringförmig umschließende, als Teil des Filterelements ausgebildete Folie gebildet ist. Alternativ kann der Anströmschutz auch durch eine das Filterelement im Einströmbereich ringförmig umgebende, sich von der auslassseitigen, axialen Gehäusewand in den Filtergehäuseinnenraum erstreckende Wand gebildet sein. Filterelement und Anströmschutz sind in der Zeichnung nicht dargestellt. Durch den über die Rotationsbewegung der Luft bewirkten Zykloneffekt wirken Fliehkräfte auf die Staubpartikel der strömenden Luft, sodass diese sich teilweise an der Gehäusewand abscheiden und über den Schmutzauslass 106 aus dem Filtersystem 100 abströmen können. Dadurch wird das Filterelement weniger belastet. Die gereinigte Luft kann über den zentrischen Auslass 104 aus dem Gehäuse 108 abgeführt werden.

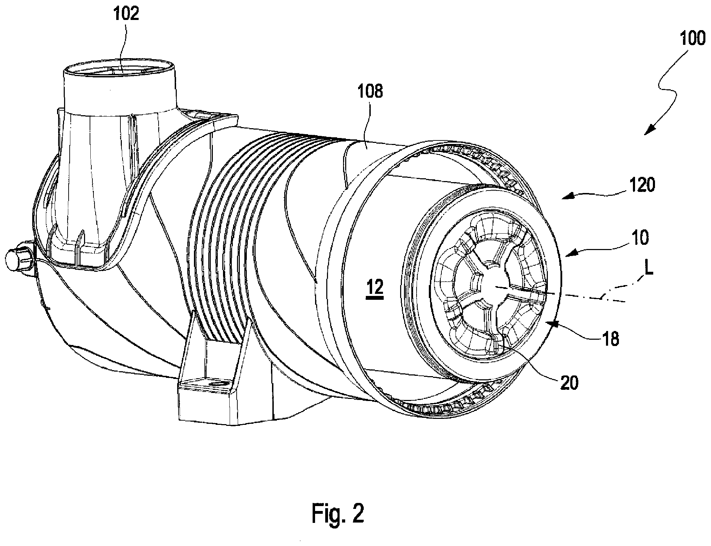

Figur 2 zeigt eine perspektivische Ansicht eines Filtersystems 100 nach einem Ausführungsbeispiel der Erfindung mit abgenommenem Deckel des Gehäuses 108. Im Inneren des Gehäuses 108 ist ein montiertes Filterelement 10 mit einem Filterkörper 12, der mit einer zweiten Endscheibe 18 abgeschlossen ist, zu sehen. An der dem offenen Ende des Gehäuses 108, der Stirnseite 120, zugewandten Seite der zweiten Endscheibe 18 sind Abstütznoppen 20 zur Abstützung der Endscheibe 18 an einem Deckel (nicht dargestellt) zu erkennen.

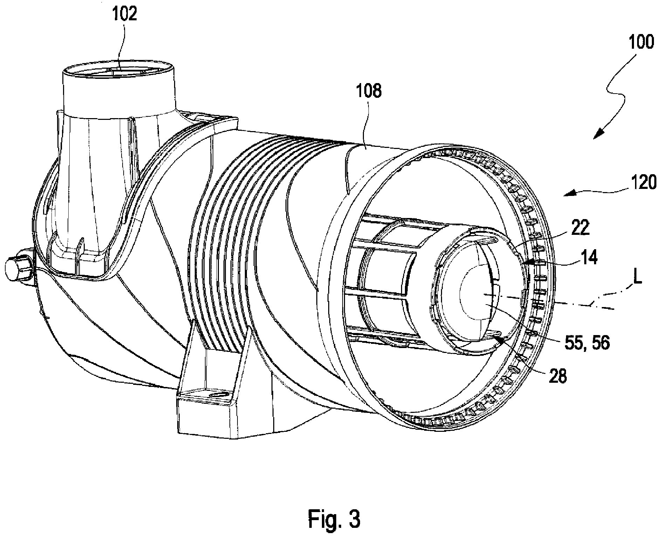

In Figur 3 ist weiter eine perspektivische Ansicht eines Filtersystems 100 nach Figur 2 bei abgenommenem Filterelement dargestellt. Man erkennt am offenen Ende des Gehäuses 108, der Stirnseite 120, ein gehäusefestes Stützrohr 14, das (bei montiertem Filterelement) im Inneren des Filterelements angeordnet ist und dieses radial innen stützt und gegen ein Kollabieren schützt. Im Ruhezustand des Systems ist jedoch das Stützrohr vom nicht durchströmten Filterkörper beabstandet. Dadurch wird die Montage des Filterelements nicht unnötig durch zusätzliche Reibung erschwert und die Gefahr einer Beschädigung des Filtermediums beim Einbau des Filterelements 10 reduziert. Konzentrisch zur Längsachse des Filtersystems 100 ist im Inneren des Stützrohrs 14 ein Sekundärelement 28 vorgesehen. Zu sehen ist das geschlossene Ende 55 des Sekundärelements 28, das als Handgriff 56 zum einfachen Entfernen des gesteckten Sekundärelements 28 aus dem Gehäuse 108 bzw. dem Stützrohr 14 ausgebildet ist.

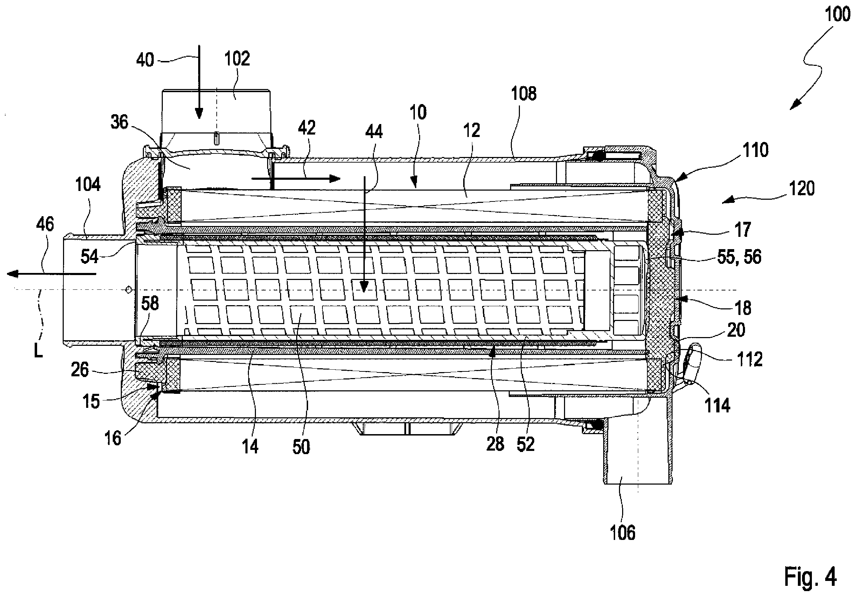

In Figur 4 ist ein Längsschnitt durch ein Filtersystem 100 nach einem Ausführungsbeispiel der Erfindung mit tangentialem Einlass 102, zentrischem Auslass 104 und bodenseitigem Schmutzauslass 106 dargestellt. Das Gehäuse 108 des Filtersystems 100 ist an der Stirnseite 120 mit einem Deckel 110 verschlossen. Ein Filterelement 10, das einen um die Längsachse L konzentrischen Filterkörper 12 umfasst, ist an zwei gegenüberliegenden Stirnseiten 15, 17 mit einer ersten offenen und einer zweiten Endscheibe 16, 18, die beispielsweise aus Polyurethanschaum oder einem Elastomer ausgeführt sein können, abgeschlossen. Der Filterkörper 12 kann beispielsweise aus einem zickzackförmig gefalteten (plissierten) Filterbalg bestehen und ringförmig geschlossen ausgeführt sein. Die Faltung kann beispielsweise durch Messerfaltung, für längere Filterkörper 12, oder Rotationsfaltung hergestellt werden. Der Filterbalg kann beispielsweise aus Papier, Zellulose oder einer Mischfaser aus Kunststoff und Zellulose bestehen und mit glatter Oberfläche, rolliert und/oder in verschiedenen Prägeformen gestalteter Oberfläche zur Versteifung und/oder Schaffung von Hohlräumen zur Staubablagerung ausgeführt sein. Der Filterbalg kann eine Beschichtung und/oder Imprägnierung aufweisen, um Feuchtigkeit abzuweisen. Er kann alternativ auch mit Nanofasern beschichtet sein. Der Filterkörper 12 kann weiterhin mit einem Fadenwickel strukturell versteift sein.

Die zweite Endscheibe 18 weist Abstütznoppen 20 auf, welche axial nach außen erstreckend angeordnet sind und sich bei einem Einbau in das aufnehmende Gehäuse 108 an dem Gehäuse 108, genauer dem Deckel 110 des Gehäuses 108 bevorzugt im Bereich einer inneren Deckelkontur 114 des Deckels 110 anliegend axial abstützen, wobei die innere Deckelkontur 114 beispielsweise in einem Bereich als ringförmige Nut ausgebildet ist, in welche die Abstütznoppen eingreifen, so dass auch eine radiale Abstützung an den radialen Wänden der Nut möglich ist. Bevorzugt sind an der zweiten Endscheibe 18 eine zentrale Abstütznoppe 202 im Bereich der Längsachse L des Filterelements 10 und eine Mehrzahl von ringförmig oder kreisförmig um die Längsachse L herum angeordneten, regelmäßig oder unregelmäßig beabstandeten, exzentrischen Abstütznoppen 20 vorgesehen. Die Abstütznoppen sind bevorzugt einstückig und/oder materialeinheitlich mit der zweiten Endscheibe 18 ausgeführt. Die radiale Position, d.h. der Abstand vom Mittelpunkt der zweiten Endscheibe der exzentrischen Abstütznoppen 20 ist bevorzugt so gewählt, dass die exzentrischen Abstütznoppen in direkter axialer Fortsetzung des Stützrohrs 14 angeordnet sind. Bevorzugt stimmt daher der Durchmesser des Kreises, auf dem die exzentrischen Abstütznoppen 20, bevorzugt mit ihren Mittelpunkten, angeordnet sind, mit dem Durchmesser des Stützrohrs 14, bevorzugt mit dem Mittelwert zwischen Innen- und Außendurchmesser des Stützrohrs 14 überein. Anders ausgedrückt sind die exzentrischen Abstütznoppen 20 auf einem Kreis mit dem Durchmesser des Stützrohrs 14 angeordnet und/oder die exzentrischen Abstütznoppen 20 sind radial im Bereich des Querschnitts des Stützrohrs 14 angeordnet. Die innere Deckelkontur 114 weist in der Mitte des Deckels 110 bevorzugt eine ebene Fläche auf, an welcher die zentrale Abstütznoppe 202 abstützbar ist. Die zweite Endscheibe 18 ist bevorzugt zumindest in dem vom Filterkörper 12 ringförmig umschlossenen Bereich derart elastisch ausgebildet, dass der mittlere Bereich mit der zentralen Abstütznoppe vom Sekundärelement 28 elastisch nach außen gedrückt werden kann, bis sie am Deckel anliegt. Während der Montage des Deckels 110 werden dann die exzentrischen Abstütznoppen 20 gegenüber der zentralen Abstütznoppe 202 leicht in Richtung offene Endscheibe 16 verschoben. Wenn dann der Gehäusedeckel 18 zum Wechsel des Filterelements abgenommen wird, ist die zweite Endscheibe 18 leicht vorgespannt und erleichtert das Entfernen des Filterelements 10 von seinem reibungsbehafteten Dichtsitz an der offenen Endscheibe 16. Im Inneren 50 des Filterelements 10 ist das gehäusefeste Stützrohr 14 um die Längsachse L konzentrisch angeordnet und an dem auslassseitigen Ende des Stützrohrs 14 fest mit dem Gehäuse 108 verbunden, beispielsweise verschnappt, verklebt oder verschweißt. Die dem Stützrohr 14 zugewandte Fläche der zweiten Endscheibe 18 liegt auf dem offenen, der Endscheibe 18 zugewandten, Ende des Stützrohrs 14 auf. Wenn beim Schließen des Deckels 110 die innere Deckelkontur 114 des Deckels 110 auf die Endscheibe 18 drückt, wird diese Kraft durch die Endscheibe 18 über die Abstütznoppen 20 auf die Endscheibe 18 durchgeleitet, da sich diese auf dem Stützrohr 14 abstützen kann. Der Kraftfluss erfolgt dabei bevorzugt rein axial vom Stützrohr 14 über die zweite Endscheibe 18 und deren exzentrische Abstütznoppen 20 auf die innere Deckelkontur 114 des Deckels 110. Auf diese Weise ist das Filterelement 10 über die zweite Endscheibe 18 axial gegen den Deckel 110 und damit gegen das Gehäuse 108 verspannt und erfährt dadurch insbesondere ohne Belastung des Filterkörpers 12 mit Axialkräften eine Festlagerung an der Stirnseite 17, dem deckelseitigen Ende des Filterelements 10.

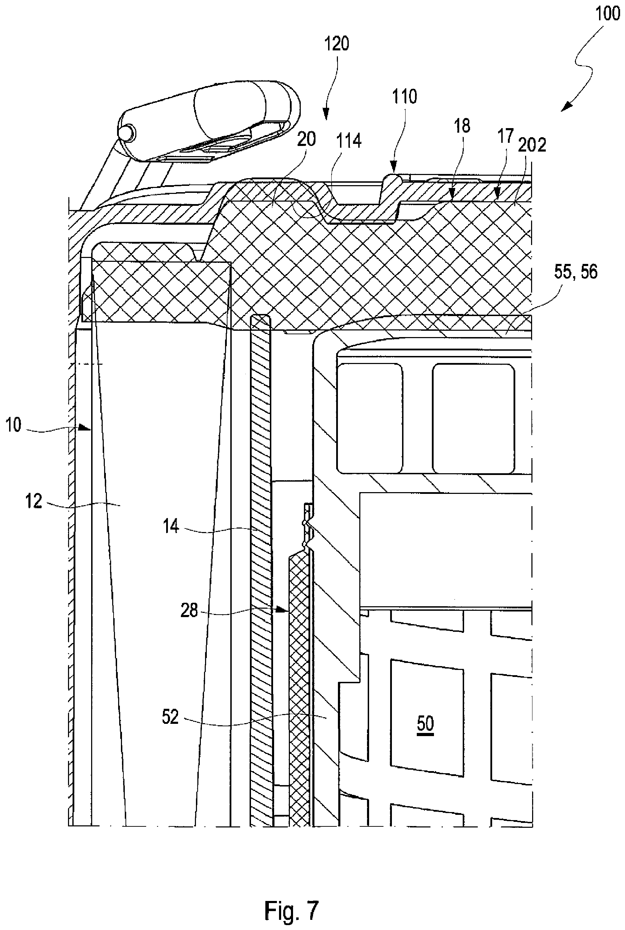

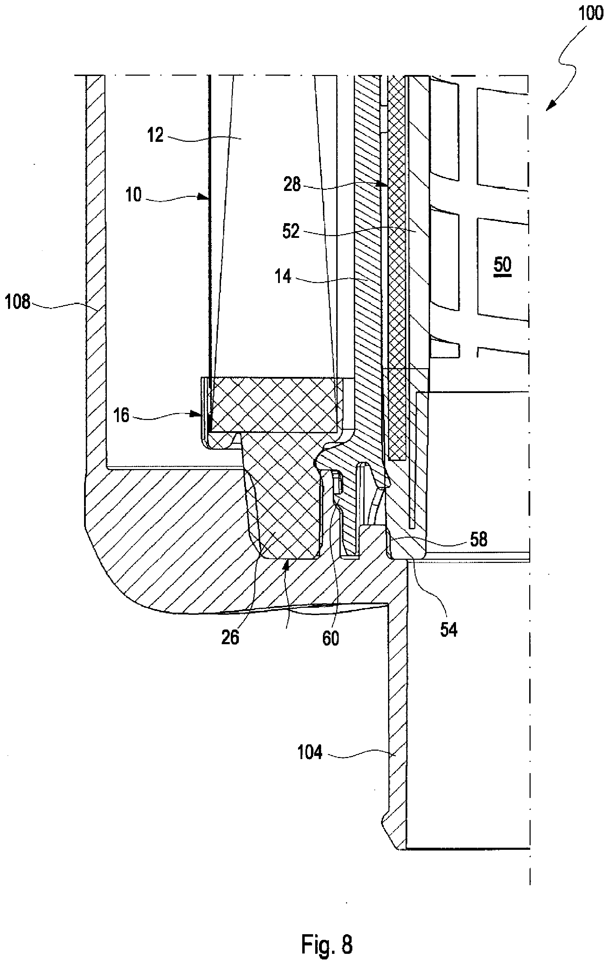

Weiter sind in der inneren Deckelkontur 114, bevorzugt in der ringförmigen Nut, rippenförmige, bevorzugt radial verlaufende, sich weiter bevorzugt leicht in den Innenraum des Filtergehäuses erstreckende, Erhebungen 112 angebracht, mit denen sich der elastische Werkstoff der zweiten Endscheibe 18 verzahnen oder verkrallen kann, sodass das Filterelement 10 dadurch gegen mögliche Verdrehungen bei Vibrationen im Betrieb gesichert ist. Die Erhebungen drücken sich dabei in die exzentrischen Abstütznoppen 20 der zweiten Endscheibe, so dass ein Formschluss in Drehrichtung um die Längsachse L erzielt wird. Weiter sind auch an dem der Endscheibe 18 zugewandten Ende des Stützrohrs 14 Aussparungen 22 denkbar, welche eine weitere Verzahnung oder Verkrallung des Stützrohrs 14 mit der Endscheibe 18 ermöglichen, um so eine weitere Verdrehsicherung des Filterelements 10 durch Vibrationen zu gewährleisten. Die zweite Endscheibe drückt sich dabei in die Aussparungen 22, so dass ein Formschluss in Drehrichtung um die Längsachse L erzielt wird. Um das oben Beschriebene zu ermöglichen, ist es bevorzugt, eine zweite Endscheibe aus einem beispielsweise gegossenen, im Vergleich zum Gehäusematerial und Stützrohrmaterial (beides üblicherweise spritzgegossene Thermoplaste, insbesondere mit Glasfaseranteil, oder Metall) weichen Material zu verwenden, zweckmäßigerweise Polyurethanschaum oder ein ähnlich elastischer Werkstoff, bevorzugt mit einer Härte im Bereich von ca. 10-30 Shore A. Der Abstand zwischen der Innenfläche der zweiten Endscheibe 18 und den axialen Außenflächen der Abstütznoppen 20, 202 ist bevorzugt gleich oder bevorzugt etwas größer gewählt oder ausgelegt als der Abstand zwischen der Innenfläche des Deckels 110 im Bereich der Längsachse, d.h. in dessen Mitte, und dem axialen Ende des Sekundärelements 28 bzw. zwischen der Innenfläche des Deckels 110 im Bereich der inneren Deckelkontur 114 und dem Stützrohr 14. Besonders bevorzugt ist mindestens einer der genannten Abstände an der zweiten Endscheibe mit einem Übermaß von 1-5 mm ausgelegt, bevorzugt bezogen auf die durch den Deckel 110 einerseits und Stützrohr 14 sowie Sekundärelement 28 andererseits definierten Abstände. Auf diese Weise kann eine zuverlässige Festlagerung des Filterelements 10 gewährleistet werden. In dem Fall, dass wie bevorzugt die zweite Endscheibe aus einem gegossenen Polyurethanschaum oder einem ähnlich elastischen Material hergestellt ist, können die Dicke der zweiten Endscheibe und damit auch die oben genannten, durch die zweite Endscheibe definierten Abstände leicht durch die Menge des in die Gießschale eindosierten Polyurethans eingestellt werden. Die Gießschale ist dabei einseitig offen und nimmt den Filterkörper vor dem Eindosieren des Polyurethans auf, wobei die Gießschale die axial nach außen weisende Form der zweiten Endscheibe 18 eindeutig definiert und die Innenfläche durch das frei in der Gießschale aufschäumende und anschließend aushärtende Polyurethan gebildet wird. Der Grad einer möglichen elastischen Verpressung wird jeweils aus den Figuren 7 und 8 in allen Bereichen deutlich, in welchen die Zeichnungen zur besseren Sichtbarkeit leicht übertrieben Materialkollisionen zeigen, die sich in Realität in elastischen Verformungen, hier im Wesentlichen des Materials der Endscheiben, äußern.

An der gegenüberliegenden Stirnseite 15 des Filterelements 10 ist an der ersten Endscheibe 16 eine Radialdichtung 26 angebracht, mit deren Hilfe das Filterelement 10 den ungefilterten gegen den gefilterten Luftraum abdichtet.

Staubbeladene Luft kann durch den Einlass 102 in Pfeilrichtung 40 einströmen, der in diesem Fall als tangentialer Einlass dargestellt ist und durch die mit Hilfe eines Zyklonabscheiders 36 bewirkte Rotationsbewegung der Luft einen Zyklonbetrieb ermöglicht. Staubpartikel können durch die Rotationsbewegung teilweise vorabgeschieden sich an der inneren Gehäusewand ablagern und durch den Schmutzauslass 106 bei Einbau des Filtergehäuses 108 in waagrechter Lage nach unten durch die Schwerkraft aus dem Filtersystem 100 entleert werden. Die Luft strömt beim Betrieb nach Teilabscheidung der Staubpartikel durch den Filterkörper 12 in Pfeilrichtung 42, 44 ins Innere 50 des Filterelements. Staubpartikel bleiben dabei je nach Filtermedium ab einer bestimmten Größe im Filtermedium hängen. Je nach Staubeintrag muss deshalb das Filterelement 10 nach einer gewissen Standzeit ausgetauscht werden. Über den Auslass 104 strömt die gefilterte Luft in Pfeilrichtung 46 ab.

Im Inneren 50 des Filterelements 10 ist ein Sekundärelement 28 angebracht, das im Wesentlichen aus einer tragenden Struktur, dem Körper 52 mit einem relativ durchlässigen Filtermedium, beispielsweise einem Vlies, besteht und beim Austausch des Filterelements 10 im Gehäuse 108 zum Schutz der weiteren Luftführung, beispielsweise einer Brennkraftmaschine, gegen eindringende Staubpartikel und andere Gegenstände verbleibt. Das Sekundärelement 28 ist mit dem offenen Ende 54 in einen Gehäusesitz 58 am auslassseitigen Teil des Gehäuses 108 gesteckt. Auf dem geschlossenen Ende 55 des Sekundärelements 28 liegt die zweite Endscheibe 18 des Filterelements 10 im Bereich ihrer Mitte und/oder der Längsachse sowie der zentralen Abstütznoppe 202 auf, wodurch beim Schließen des Gehäusedeckels 110 eine Kraft über die zentrale Abstütznoppe 202 der Endscheibe 18 in das geschlossene Ende des Sekundärelements 28, das beispielsweise als Handgriff 56 ausgebildet ist, mit dem es aus dem Gehäusesitz 58 und damit dem Gehäuse 108 auch wieder entfernt werden kann, geleitet werden kann und das Sekundärelement 28 so fest in seinen Gehäusesitz 58 gepresst wird. Auf diese Weise ist das Filterelement 10 zusätzlich zum Stützrohr 14 über die zweite Endscheibe 18 axial gegen den Deckel 110 und damit gegen das Gehäuse 108 verspannt und erfährt dadurch eine Festlagerung an der Stirnseite 17, dem deckelseitigen Ende des Filterelements 10. Es ist zwar auch denkbar, die Länge des Stützrohrs 14 und des Sekundärelements jeweils so auszulegen, dass die zweite Endscheibe 18 ausschließlich am Sekundärelement 28 oder dem Stützrohr 14 anliegt. Bevorzugt ist jedoch eine solche Auslegung, dass die zweite Endscheibe 18 sowohl am Sekundärelement 18 als auch am Stützrohr 14 anlegbar ist, da auch einzelne Applikationen eines erfindungsgemäßen Luftfilters ohne Sekundärelement 28 denkbar sind. Eine Lösung, in der die zweite Endscheibe 18 ausschließlich am Sekundärelement 28 anliegt, wäre für Applikationen denkbar, in welchen eine Rotation des Filterelements 10 im Betrieb unkritisch ist oder mittels anderer Mittel behindert wird.

Das Filterelement 10 kann als Luftfilter, insbesondere als Luftfilter einer Brennkraftmaschine, eingesetzt werden. Prinzipiell ist jedoch auch eine Verwendung als Partikelfilter in ähnlicher Bauform denkbar.

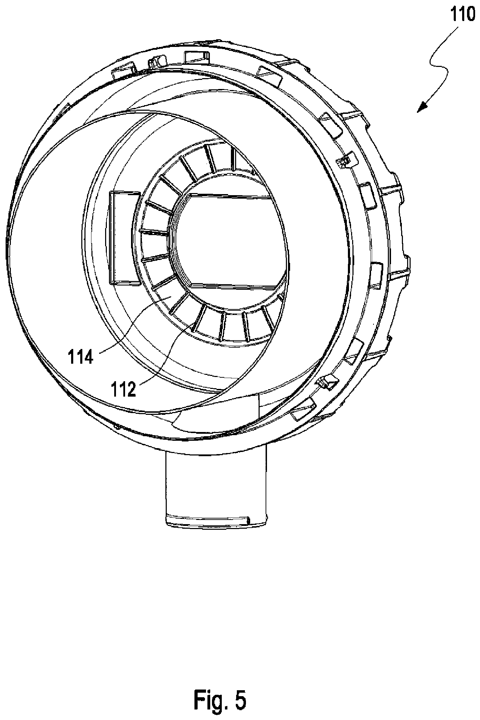

Figur 5 zeigt eine Innenansicht eines Deckels 110 eines Gehäuses eines Filtersystems mit rippenförmigen Erhebungen 112 in der inneren Deckelkontur 114 nach einem Ausführungsbeispiel der Erfindung. Durch Verzahnung der Abstütznoppen einer zweiten Endscheibe eines Filterelements kann das Filterelement gegen Verdrehen im Betrieb auch bei einer möglichen Schwingungsanregung geschützt werden.

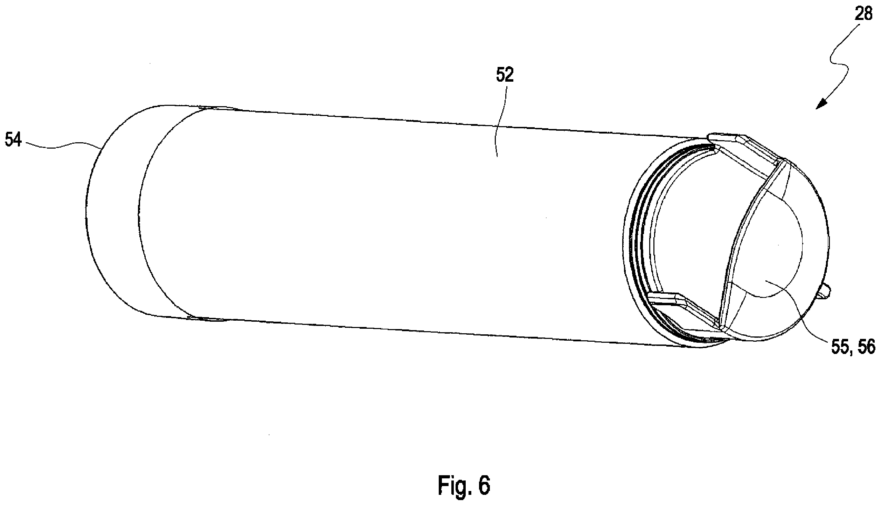

In Figur 6 ist eine perspektivische Ansicht eines Sekundärelements 28 nach einem Ausführungsbeispiel der Erfindung dargestellt. Der zylinderförmige Körper 52 des Sekundärelements 28, der am auslassseitigen Ende 54 offen ist, um das gefilterte Medium auszuleiten, ist am anderen Ende 55 geschlossen und weist zur Entnahme aus dem Gehäuse des Filtersystems einen Handgriff 56 auf. Auf diesem geschlossenen Ende 55, insbesondere auf dem Handgriff 56, kann sich die zweite Endscheibe des Filterelements abstützen und so die Kraft in das Sekundärelement einleiten, um es in den Gehäusesitz zu pressen und damit auch den ungefilterten gegen den gefilterten Raum im Inneren des Sekundärelements 28 abzudichten.

Figur 7 zeigt einen Schnitt durch den deckelseitigen Teil eines Filtersystems 100 nach einem Ausführungsbeispiel der Erfindung. Es ist ein Teil des Filterelements 10, bestehend aus Filterkörper 12 und zweiter Endscheibe 18, sowie im Inneren des Filterelements 10 das gehäuseseitig montierte Stützrohr 14 und das ebenfalls in einem Gehäusesitz angebrachte Sekundärelement 28 dargestellt. Nach der Montage des Filterelements 10 im Gehäuse 108 und Schließen des Deckels 110 an der Stirnseite 120 drückt dieser auf die zweite Endscheibe 18 über die Abstütznoppen 20. Die Endscheibe 18 drückt auf der anderen Seite auf das der Endscheibe 18 zugewandte Ende des Stützrohrs 14 sowie auf das geschlossene Ende 55 des Sekundärelements 28 mit dem Handgriff 56. In der Zeichnung ist dabei eine Durchdringung der Endscheibe 18 mit dem Deckel 110, dem Stützrohr 14 und dem Sekundärelement 28 dargestellt. Da der Werkstoff der Endscheibe 18 zweckmäßigerweise Polyurethanschaum oder ein ähnlich elastischer Werkstoff ist, wird die Endscheibe 18 in der Realität zwischen Deckel 110, Stützrohr 14 und Sekundärelement 28 zusammengepresst und überträgt so die Kraft vom Deckel 110 auf das Stützrohr 14 und das Sekundärelement 28. Auf diese Weise wird das Filterelement 10 über die Endscheibe 18 fest eingeklemmt und damit fest gelagert. Außerdem presst die Endscheibe 18 auch das Sekundärelement 28 fest in seinen Gehäusesitz.

In Figur 8 ist ein Schnitt durch den auslassseitigen Teil 104 eines Filtersystems nach einem Ausführungsbeispiel der Erfindung dargestellt. Man erkennt zum einen, dass an der gegenüberliegenden Stirnseite 15 des Filterelements 10 an der ersten Endscheibe 16 eine Radialdichtung 26 angebracht ist, mit deren Hilfe das Filterelement 10 den ungefilterten gegen den gefilterten Luftraum abdichtet. Zum anderen ist in dem Schnitt deutlich zu erkennen, wie das Stützrohr 14 am auslassseitigen Ende über eine Rastverbindung 60 fest mit dem Gehäuse 108 verbunden ist. Das Sekundärelement 28 ist dagegen in einen Gehäusesitz 58 gesteckt und wird deshalb zweckmäßigerweise über das geschlossene Ende und die zweite Endscheibe des Filterelements in den Gehäusesitz 58 gepresst. Figur 8 zeigt ferner eine flexible Folie, die als Anströmschutz ausgebildet ist. Diese ist am Ende des Bezugszeichenpfeils 10 in Form einer verdickten Linie dargestellt. Die Folie ist um den Außenumfang des Filterkörpers 12 über der äußeren Mantelfläche des Filterkörpers 12 angebracht und entlang einer Nahtstelle beispielsweise mit Hilfe einer Ultraschallschweißnaht zu einem endlosen, ringförmigen Halbzeug verbunden und in die zweite Endscheibe eingebettet.

## Patentansprüche

1. Luftfiltersystem (100) für die Ansaugluft einer Brennkraftmaschine, umfassend
- ein Gehäuse (108) mit einer Längsachse (L),
- einen Deckel (110), der das Gehäuse (108) an einer Stirnseite (120) verschließt,
- einen am Gehäuse (108) angeordneten Einlass (102) zum Zuführen eines zu filternden Mediums und einen am Gehäuse (108) angeordneten Auslass (104) zur Ableitung des gefilterten Mediums,
- ein auswechselbares Filterelement (10), welches im Gehäuse (108) angeordnet ist und einen Filterkörper (12), eine erste an einer Stirnseite (15) angeordnete offene Endscheibe (16) und eine zweite an der gegenüberliegenden Stirnseite (17) angeordnete Endscheibe (18) umfasst,
- ein gehäusefestes Stützrohr (14), welches im Inneren des Filterelements (10) um die Längsachse (L) konzentrisch angeordnet ist, insbesondere zur radialen Abstützung des Filterkörpers (12),
- ein auswechselbares Sekundärelement (28) mit einem offenen Ende (54) und einem geschlossenen Ende (55), welches im Inneren des Stützrohres (14) angeordnet und mit dem offenen Ende in einem Gehäusesitz (58) angebracht ist,
wobei das Filterelement (10) mit der zweiten Endscheibe (18) auf dem Stützrohr (14) und auf dem geschlossenen Ende (55) des Sekundärelements (28) aufliegend an einer inneren Deckelkontur (114) anliegend verdrehsicher gelagert ist, wobei die zweite Endscheibe (18) eine Mehrzahl von exzentrischen, kreisförmig um die Längsachse herum angeordneten, regelmäßig oder unregelmäßig beabstandeten Abstütznoppen (20) zur axialen Kraftübertragung zwischen Deckel (110) und Stützrohr (14) aufweist, wobei die zweite Endscheibe (18) ferner eine zentrale Abstütznoppe (202) zur axialen Kraftübertragung zwischen Deckel (110) und Sekundärelement (28) aufweist.

2. Luftfiltersystem nach Anspruch 1, wobei das Sekundärelement (14) in den Gehäusesitz (58) gepresst ist.

3. Luftfiltersystem nach Anspruch 1 oder 2, wobei das Stützrohr (14) an seinem der zweiten Endscheibe (18) zugewandten Ende Aussparungen (22) aufweist, mit denen die zweite Endscheibe (18) verzahnt ist.

4. Luftfiltersystem nach einem der vorhergehenden Ansprüche, wobei der Deckel (110) des Gehäuses (108) rippenförmige Erhebungen (112) aufweist, mit der die zweite Endscheibe (18) des Filterelements (10) verzahnt ist.

5. Luftfiltersystem nach einem der vorhergehenden Ansprüche, wobei die zweite Endscheibe (18) Abstütznoppen (20, 202) zur axialen und radialen Kraftübertragung zwischen Deckel (110) und zweiter Endscheibe (18) aufweist.

6. Luftfiltersystem nach einem der vorhergehenden Ansprüche, wobei die zweite Endscheibe (18) aus einem Polyurethanschaum oder einem Elastomer besteht.

7. Luftfiltersystem nach einem der vorhergehenden Ansprüche, wobei die erste Endscheibe (16) des Filterelements eine Radialdichtung (26) gegenüber dem Gehäuse (108) aufweist.

8. Luftfiltersystem nach einem der vorhergehenden Ansprüche, wobei das Sekundärelement (28), mit dem Gehäuse (108) verbunden, beim Wechsel des Filterelements (10) im Gehäuse (108) verbleibt.

9. Luftfiltersystem nach einem der vorhergehenden Ansprüche, wobei im Bereich des Einlasses (102) ein Zyklonabscheider (36) vorgesehen ist und am Gehäuse (108) oder am Deckel (110) ein Schmutzauslass (106) vorgesehen ist.

10. Luftfilterelement (10) zum Einbau in ein Luftfiltersystem (100) nach einem der vorhergehenden Ansprüche, wobei das Filterelement (10) auswechselbar in dem Gehäuse (108) des Luftfiltersystems (100) anordenbar ist und einen Filterkörper (12), eine erste an einer Stirnseite (15) angeordnete offene Endscheibe (16) und eine zweite an der gegenüberliegenden Stirnseite (17) angeordnete, geschlossene Endscheibe (18) umfasst, wobei das Filterelement (10) an der zweiten Endscheibe (18) auf der in Richtung der offenen Endscheibe (16) gewandten Innenseite der zweiten Endscheibe (18) eine Anlagefläche zur Anlage an dem gehäuseseitigen Stützrohr (14) und dem Sekundärelement (28) und auf der Außenseite der zweiten Endscheibe (18) eine Abstützstruktur zur verdrehsicheren Abstützung an der inneren Deckelkontur (114) aufweist, wobei die zweite Endscheibe (18) eine zentrale Abstütznoppe (202) zur axialen Kraftübertragung zwischen Deckel (110) und Sekundärelement (28) sowie eine Mehrzahl von exzentrischen, kreisförmig um die Längsachse herum angeordneten, regelmäßig oder unregelmäßig beabstandeten Abstütznoppen (20, 202) zur axialen Kraftübertragung zwischen Deckel (110) und Stützrohr (14) aufweist.

11. Luftfilterelement (10) nach den vorhergehenden Anspruch, wobei die Abstützstruktur durch Abstütznoppen (20) mit der inneren Deckelkontur (114) verzahnbar sind.

## Claims

1. Air filter system (100) for the intake air of an internal combustion engine, comprising
- a housing (108) having a longitudinal axis (L),
- a cover (110) which closes the housing (108) at a front face (120),
- an inlet (102) disposed at the housing (108) for supplying a medium to be filtered and an outlet (104) disposed at the housing (108) for discharging the filtered medium,
- an exchangeable filter element (10) which is disposed in the housing (108) and comprises a filter body (12), a first open end disc (16) disposed at a front face (15) and a second end disc (18) disposed at the opposite front face (17),
- a support tube (14) firmly attached to the housing which is concentrically disposed inside the filter element (10) around the longitudinal axis (L), in particular for radially supporting the filter body (12),
- an exchangeable secondary element (28) having an open end (54) and a closed end (55) which is disposed inside the support tube (14) and attached with the open end in a housing seat (58),
wherein the filter element (10) is mounted with the second end disc (18) resting on the support tube (14) and on the closed end (55) of the secondary element (28) on an inner cover contour (114) in a rotationally secure manner, wherein the second end disc (18) features a plurality of eccentric, regularly or irregularly spaced support knobs (20) arranged circularly around the longitudinal axis for axial force transmission between the cover (110) and the support tube (14), wherein the second end disc (18) features furthermore a central support knob (202) for axial force transmission between cover (110) and secondary element (28).

2. Air filter system according to claim 1, wherein the secondary element (14) is pressed into the housing seat (58).

3. Air filter system according to claim 1 or 2, wherein the support tube (14) features recesses (22) at its end facing the second end disc (18) with which the second end disc (18) is toothed.

4. Air filter system according to one of the preceding claims, wherein the cover (110) of the housing (108) features ribbed projections (112) with which the second end disc (18) of the filter element (10) is toothed.

5. Air filter system according to one of the preceding claims, wherein the second end disc (18) features support knobs (20, 202) for the axial and radial force transmission between cover (110) and second end disc (18).

6. Air filter system according to one of the preceding claims, wherein the second end disc (18) is made of polyurethane foam or an elastomer.

7. Air filter system according to one of the preceding claims, wherein the first end disc (16) of the filter element features a radial seal (26) with regard to the housing (108).

8. Air filter system according to one of the preceding claims, wherein the secondary element (28), connected to the housing (108), remains in the housing (108) when the filter element (10) is changed.

9. Air filter system according to one of the preceding claims, wherein in the area of the inlet (102) a cyclone separator (36) is provided and a dirt outlet (106) is provided on the housing (108) or on the cover (110).

10. Air filter element (10) for installation in an air filter system (100) according to one of the preceding claims, wherein the filter element (10) is exchangeably arrangeable in the housing (108) of the air filter system (100) and comprises a filter body (12), a first open end disc (16) arranged on a front side (15) and a second closed end disc (18) arranged on the opposite front side (17), wherein the filter element (10) features on the second end disc (18) on the inside of the second end disc (18) facing in the direction of the open end disc (16) a contact surface designed to contact the support tube (14) on the housing side and the secondary element (28) and on the outside of the second end disc (18) a support structure for securing the support against the inner cover contour (114) in a rotationally secure manner, wherein the second end disc (18) features a central support knob (202) for axial force transmission between cover (110) and secondary element (28) as well as a plurality of eccentric support knobs (20, 202) disposed circularly around the longitudinal axis and spaced at regular or irregular intervals for axial force transmission between cover (110) and support tube (14).

11. Air filter element (10) according to the preceding claim, wherein the support structure can be toothed by support knobs (20) with the inner cover contour (114).

## Revendications

1. Système de filtre à air (100) pour l'air d'aspiration d'un moteur à combustion interne, comprenant
- un boîtier (108) ayant un axe longitudinal (L),
- un couvercle (110) obturant le boîtier (108) sur une face frontale (120),
- une entrée (102) située sur le boîtier (108) permettant d'introduire un milieu à filtrer, ainsi qu'une sortie (104) située sur le boîtier (108) permettant d'évacuer le milieu filtré,
- un élément filtrant (10) échangeable disposé dans le boîtier (108) et comprenant un corps de filtre (12), un premier disque d'extrémité (16) ouvert disposé sur une face frontale (15) et un second disque d'extrémité (18) disposé sur la face frontale (17) opposée,
- un tube de support (14) solidaire du boîtier qui est disposé à l'intérieur de l'élément filtrant (10) de manière concentrique autour de l'axe longitudinal (L), notamment pour supporter radialement le corps de filtre (12),
- un élément secondaire (28) échangeable ayant une extrémité ouverte (54) et une extrémité fermée (55) disposé à l'intérieur du tube de support (14) et monté dans le siège de boîtier (58) avec l'extrémité ouverte,
l'élément filtrant (10) étant monté avec le second disque d'extrémité (18) reposant sur le tube de support (14) et sur l'extrémité fermée (55) de l'élément secondaire (28) en s'appuyant sur un contour intérieur du couvercle (114) d'une manière sécurisée en rotation, le second disque d'extrémité (18) présentant une pluralité de picots d'appui (20) excentriques disposés de manière circulaire autour de l'axe longitudinal et espacés de manière régulière ou irrégulière pour la transmission axiale de force entre le couvercle (110) et le tube de support (14), le second disque d'extrémité (18) présentant en outre un picot d'appui (202) central pour la transmission axiale de force entre le couvercle (110) et l'élément secondaire (28).

2. Système de filtre à air selon la revendication 1, l'élément secondaire (14) étant pressé dans le siège de boîtier (58).

3. Système de filtre à air selon la revendication 1 ou 2, le tube de support (14) présentant des évidements (22) à son extrémité tournée vers le second disque d'extrémité (18) avec lequel le second disque d'extrémité (18) est imbriqué.

4. Système de filtre à air selon l'une quelconque des revendications précédentes, le couvercle (110) du boîtier (108) présentant des saillies nervurées (112) avec lesquelles le second disque d'extrémité (18) de l'élément filtrant (10) est imbriqué.

5. Système de filtre à air selon l'une quelconque des revendications précédentes, le second disque d'extrémité (18) présentant des picots d'appui (20, 202) pour la transmission axiale de force et radiale entre le couvercle (110) et le second disque d'extrémité (18).

6. Système de filtre à air selon l'une quelconque des revendications précédentes, le second disque d'extrémité (18) étant réalisé en mousse polyuréthane ou en élastomère.

7. Système de filtre à air selon l'une quelconque des revendications précédentes, le premier disque d'extrémité (16) de l'élément filtrant présentant un joint radial (26) par rapport au boîtier (108).

8. Système de filtre à air selon l'une quelconque des revendications précédentes, l'élément secondaire (28), une fois relié au boîtier (108), restant dans le boîtier (108) lors de l'échange de l'élément filtrant (10).

9. Système de filtre à air selon l'une quelconque des revendications précédentes, un séparateur à cyclone (36) étant prévu dans la zone de l'entrée (102) et un orifice d'évacuation des saletés (106) étant prévu sur le boîtier (108) ou sur le couvercle (110).

10. Élément de filtre à air (10) destiné à être installé dans un système de filtre à air (100) selon l'une quelconque des revendications précédentes, l'élément filtrant (10) pouvant être disposé dans le boîtier (108) du système de filtre à air (100) de manière à pouvoir être remplacé et comprenant un corps de filtre (12), un premier disque d'extrémité (16) ouvert disposé sur une face frontale (15) et un second disque d'extrémité (18) fermé disposé sur la face frontale (17) opposée, l'élément filtrant (10) présentant sur le second disque d'extrémité (18), sur la face intérieure du second disque d'extrémité (18) tourné dans la direction du disque d'extrémité (16) ouvert, une surface de contact conçue pour la mise en contact sur le tube de support (14) du côté boîtier et l'élément secondaire (28) et sur la face extérieure du second disque d'extrémité (18), une structure d'appui pour fixer d'une manière sécurisée en rotation le support contre le contour intérieur du couvercle (114), le second disque d'extrémité (18) présentant un picot d'appui (202) central pour une transmission axiale de force entre le couvercle (110) et l'élément secondaire (28) ainsi qu'une pluralité de picots d'appui (20, 202) excentriques, disposés de manière circulaire autour de l'axe longitudinal et espacés de manière régulière ou irrégulière pour une transmission axiale de force entre le couvercle (110) et le tube de support (14).

11. Élément de filtre à air (10) selon la revendication précédente, la structure d'appui pouvant être imbriquée avec le contour intérieur de couvercle (114) par des picots d'appui (20).
